Europäisches Patentamt

European Patent Office

Office européen des brevets

(19)

(11) **EP 1 352 709 B1**

(12) **FASCICULE DE BREVET EUROPEEN**

(45) Date de publication et mention
de la délivrance du brevet:
**03.11.2004  Bulletin 2004/45**

(51) Int Cl.⁷: **B24B 9/14**, B24B 47/22,
B24B 49/12, B24B 17/06

(21) Numéro de dépôt: **03290887.3**

(22) Date de dépôt: **09.04.2003**

(54) **Procédé de chanfreinage d'une lentille ophtalmique comportant une étape de relevé sans contact**

Verfahren zum Abfasen eines Brillenglases mit einem berührungslosem Messvorgang

Method of chamfering an eyeglass lens comprising a contactless measuring step

(84) Etats contractants désignés:
**AT BE BG CH CY CZ DE DK EE ES FI FR GB GR
HU IE IT LI LU MC NL PT RO SE SI SK TR**

(30) Priorité: **12.04.2002  FR 0204625**

(43) Date de publication de la demande:
**15.10.2003  Bulletin 2003/42**

(73) Titulaire: **ESSILOR INTERNATIONAL (Compagnie
Générale d'Optique)
F-94220 Charenton-le-Pont (FR)**

(72) Inventeurs:
• **Guillermin, Laurent
75011 Paris (FR)**

• **Millet, Sylvaine
95230 Soisy sous Montmorency (FR)**

(74) Mandataire: **Santarelli
14, avenue de la Grande Armée,
B.P. 237
75822 Paris Cedex 17 (FR)**

(56) Documents cités:
**EP-A- 1 250 979          DE-A- 3 827 122
FR-A- 2 734 505          FR-A- 2 811 599
US-A- 6 122 063          US-A1- 2002 041 357**

**Description**

L'invention a trait à un procédé pour chanfreiner au moins un bord d'une face optique d'une lentille ophtalmique selon le préambule de la revendication 1 et une machine pour chanfreiner un bord d'une face optique d'une lentille ophtalmique selon le préambule de la revendication 22.

Pour obtenir un verre ophtalmique fini propre à être posé sur une monture de lunettes, on meule radialement une lentille brute présentant une tranche généralement cylindrique suivant un contour prédéterminé correspondant à celui du cercle de monture dans lequel le verre est destiné à être monté.

Pour meuler la lentille, on relève le profil d'au moins l'une de ses faces au droit du contour à former, puis on amène la lentille, entraînée en rotation, en contact par sa tranche avec un outil de meulage.

Une fois l'opération de meulage effectuée, la lentille présente une arête vive à la jonction de sa tranche et de chacune de ses faces.

Ce sont ces arêtes que l'on souhaite chanfreiner.

En effet, la lentille présente au niveau de sa tranche une certaine épaisseur, de sorte qu'elle dépasse, une fois montée dans son cercle de monture, de part et d'autre de celui-ci. L'on souhaite donc adoucir visuellement la jonction entre le cercle de monture et chacune des faces de la lentille.

Par ailleurs, compte tenu de la cambrure des faces de la lentille, ses arêtes peuvent se révéler tranchantes, ce qui est, en soi, dangereux.

En outre, une lentille non chanfreinée présente, au niveau de ses arêtes, une grande fragilité, et il arrive très souvent que s'en détachent des éclats de petites dimensions, qui pourraient blesser le porteur et conférer à la lentille un aspect inesthétique.

En pratique, pour chanfreiner une lentille, on entraîne la lentille en rotation, puis on amène au contact de chacune des arêtes un outil de chanfreinage.

Généralement, une lentille ophtalmique ne comporte pas de symétrie de révolution mais présente une certaine cambrure que l'on compense généralement, lors du chanfreinage, en déplaçant l'outil parallèlement à l'axe de rotation de la lentille au cours de la rotation de celle-ci.

La qualité d'un chanfrein s'apprécie par la mesure de sa cote "sur plat", c'est-à-dire la largeur de la surface oblique ainsi obtenue.

Un chanfrein est dit de bonne qualité si la valeur de sa cote sur plat est constante ou sensiblement constante (l'on peut tolérer des variations de l'ordre de 10% qui sont indétectables à l'oeil nu) sur l'ensemble du pourtour de la lentille.

L'on connaît un procédé de chanfreinage dans lequel on utilise un outil comportant des moyens de compensation permettant une certaine déformation élastique de l'outil pour l'appliquer de la manière la plus uniforme possible au verre travaillé.

Ce procédé, qui a fait l'objet par la demanderesse d'une demande de brevet français publiée sous le numéro FR-2 811 599, donne entière satisfaction, notamment pour son aspect économique et la qualité relativement bonne du chanfrein qu'il permet d'obtenir à moindre coût.

Néanmoins, tout en explorant des voies nouvelles, l'on souhaite améliorer encore la qualité du chanfreinage en utilisant une approche plus systématique.

L'on sait que, pour un angle de chanfrein donné constant, la cote sur plat de ce chanfrein dépend, en chaque point, de la cambrure de la lentille en ce point. Cela peut être démontré par la géométrie.

Précisément, l'on connaît un procédé de chanfreinage selon le préambule de la révendication 1 dans lequel on relève, au moyen d'un palpeur mécanique, la cambrure locale de la face de la lentille au voisinage du bord à chanfreiner, et dans lequel, lors du chanfreinage de la lentille, on entraîne celle-ci en rotation, et l'on déplace l'outil de chanfreinage parallèlement à l'axe de rotation de la lentille en fonction des relevés effectués.

Si ce procédé permet d'obtenir un chanfrein de bonne qualité, il n'en présente pas moins un certain nombre d'inconvénients, énumérés ci-dessous, auxquels l'on souhaite remédier.

L'effort mécanique appliqué par le palpeur sur la lentille engendre, sur le palpeur ou sur la lentille, des contraintes et déformations qui peuvent impliquer des erreurs de mesure lors des relevés.

Le frottement engendré par le glissement du palpeur sur la lentille lors de sa rotation peut engendrer sur la face concernée de celle-ci des rayures inesthétiques.

Ce même frottement provoque une usure chronique du palpeur, ce qui, d'une part, entraîne des erreurs de mesure lors du relevé et, d'autre part, impose un remplacement fréquent du palpeur ou, dans le meilleur des cas, un étalonnage du palpeur.

Compte tenu de la cambrure de la face concernée de la lentille, la réaction de la lentille appliquée au palpeur possède une composante perpendiculaire à l'axe du palpeur, ce qui peut conduire à un fléchissement ou, tout du moins, à un désaxage du palpeur et, ainsi, induire non seulement une erreur de mesure, mais également un endommagement du palpeur.

Lorsque le palpeur se trouve, au moins localement, proche de la tranche de la lentille, il tend à glisser vers l'extérieur de celle-ci et risque ainsi d'être endommagé.

L'environnement agressif d'usinage, où se mêlent eau et copeaux de meulage, provoque une usure accélérée du palpeur qui, par ailleurs, est un ensemble mécanique dont la réalisation est délicate et coûteuse.

Le palpage étant ponctuel, on doit, pour obtenir la cambrure de la lentille au voisinage du bord à chanfreiner, effectuer deux relevés successifs à des rayons différents pour chaque face, la cambrure étant définie, pour chaque point de l'arête, par l'inclinaison, par rapport à l'axe de rotation de la lentille, de la droite reliant les deux points relevés correspondants.

Deux tours complets de la lentille sont donc nécessaires pour chacune de ses faces, ce qui augmente le temps de cycle.

L'invention vise à résoudre notamment les inconvénients précités, en proposant un procédé permettant d'obtenir un chanfrein de bonne qualité, et ce de manière fiable, rapide et économique.

A cet effet, l'invention propose, selon un premier aspect, un procédé pour chanfreiner au moins un bord d'une face optique d'une lentille ophtalmique, qui comporte une étape de relevé dans laquelle on relève les cambrures successives de la face optique au voisinage et le long du bord à chanfreiner, on balaye le bord à chanfreiner au moyen d'un faisceau lumineux plan formant sur la face optique une tache lumineuse linéaire, on forme simultanément, sur des moyens de réception optique, une image de la tache lumineuse, on déduit des positions successives de cette image les cambrures successives de la face optique au voisinage du bord, et qui comporte une étape de chanfreinage dans laquelle on amène la lentille, entraînée en rotation autour d'un axe, en contact par son bord avec un outil de chanfreinage, et on pilote le positionnement relatif de la lentille et de l'outil en fonction des relevés effectués.

Les relevés étant effectués sans contact, la lentille est préservée de toute contrainte et déformation. Les rayures à sa surface sont évitées. Le positionnement relatif de la lentille et des moyens permettant d'effectuer les relevés est invariable, au bénéfice de la précision des mesures.

Il est possible de diminuer le temps de cycle, c'est-à-dire d'augmenter la vitesse de rotation de la lentille pendant l'étape de relevé, sans incidence sur la précision des mesures, d'où une productivité accrue.

De préférence, dans l'étape de relevé, on sélectionne sur l'image de la tache un premier point, image du point, appelé sommet, du bord éclairé, et un deuxième point, image d'un point de la face optique, voisin dudit sommet, on déduit de leurs positions respectives la cambrure de la face optique au sommet, et on déduit des positions de leurs images sur les moyens de réception optique, les coordonnées respectives du sommet et du point voisin suivant l'axe de rotation de la lentille, ainsi que leurs distances respectives à l'axe.

Cette déduction peut être effectuée au moyen d'un calcul par triangulation.

Dans l'étape de relevé, la cambrure de la face optique au sommet peut être déduite des coordonnées respectives du sommet et du point voisin et de leurs distances à l'axe, en calculant l'angle formé par la droite reliant ces deux points et l'axe de rotation de la lentille.

Par la suite, dans l'étape de chanfreinage, entre une première et une deuxième positions angulaires successives de la lentille, on fait alors subir à l'outil de chanfreinage, parallèlement à l'axe de rotation de la lentille, un déplacement dZ dont la valeur est fournie par la formule suivante :

$$dZ = (L_2 - L_1) + (Z_2 - Z_1) + \frac{R_2 - R_1}{\sin\beta}$$

où

- $Z_1$ et $Z_2$ sont les coordonnées des sommets correspondant respectivement à la première et à la deuxième position angulaire de la lentille, suivant l'axe de rotation de la lentille,
- $R_1$ et $R_2$ sont leurs distances respectives à l'axe,
- $\alpha_1$ et $\alpha_2$ sont leurs cambrures respectives,
- $L_1$ et $L_2$ les profondeurs de passe de l'outil au droit des sommets.

En un sommet donné du bord à chanfreiner, la profondeur de passe peut être calculée au moyen de la formule suivante :

$$L = C \cos\beta + C \sin\beta \frac{\cos\alpha}{\sin\alpha}$$

où

- C est la cote sur plat, prédéterminée, du chanfrein à former,
- $\alpha$ est la cambrure de la face optique au sommet,
- $\beta$ est l'angle entre l'arête de coupe de l'outil et l'axe de rotation de la lentille.

L'on peut appliquer ce procédé au chanfreinage des deux bords d'une même lentille.

Ainsi, la lentille présentant un bord avant sur une face avant et un bord arrière sur une face arrière, on balaye chaque bord, dans l'étape de relevé, au moyen de deux faisceaux lumineux plans formant respectivement sur chacune des faces une tache lumineuse linéaire, on forme simultanément, sur des moyens de réception optique pointés vers chaque tache lumineuse une image de chaque tache lumineuse, et on déduit des positions successives de chaque image les cambrures successives de la face avant au voisinage du bord avant et celles de la face arrière au voisinage du bord arrière.

Selon un mode de réalisation, dans l'étape de relevé, on active chaque faisceau lumineux alternativement pour chaque position angulaire de la lentille.

Les relevés peuvent ainsi être effectués simultanément sur les deux faces de la lentille.

Selon un mode de réalisation, le ou chaque faisceau lumineux est écarté de l'axe de rotation de la lentille.

Le ou chaque faisceau lumineux présente par exemple une bissectrice sensiblement parallèle à l'axe de rotation de la lentille.

Selon un mode de réalisation, les moyens de réception optique présentent un axe de pointage optique formant avec la bissectrice du faisceau lumineux un angle de pointage constant, non nul, dont la valeur de l'angle de pointage est par exemple comprise entre 40° et 50°, de préférence égale ou sensiblement égale à 45°.

Le faisceau lumineux et l'axe de rotation de la lentille sont, de préférence, sensiblement coplanaires.

En outre, l'axe de pointage forme par exemple avec la bissectrice du faisceau lumineux un plan perpendiculaire au plan du faisceau lumineux.

Par ailleurs, le faisceau lumineux est, de préférence, cohérent, au bénéfice de la précision des relevés effectués. Il s'agit par exemple d'un laser.

L'invention propose également, selon un deuxième aspect, une machine pour chanfreiner un bord d'une face optique d'une lentille ophtalmique, cette machine comportant un support rotatif pour le montage de la lentille, un outil de chanfreinage, des moyens pour déplacer l'un par rapport à l'autre le support et l'outil suivant une direction parallèle à l'axe de rotation du support, une unité de pilotage adaptée à commander lesdits moyens de déplacement, ainsi qu'au moins un dispositif de mesure optique comprenant une source lumineuse produisant un faisceau lumineux plan dirigé vers ladite face optique pour y former une tache lumineuse linéaire croisant le bord à chanfreiner, des moyens de réception optique pointés vers ladite tache lumineuse et reliés à ladite unité de pilotage, celle-ci comportant des moyens pour calculer la cambrure de ladite face au voisinage du bord à chanfreiner en fonction des relevés effectués sur les moyens de réception optique.

Une machine pour chanfreiner une lentille ophtalmique selon le préambule de la revendication 22 est décrit dans le brevet francais sous le numero FR 2 734 505 A.

Pour permettre le chanfreinage des deux bords d'une même lentille, la machine peut comporter deux dispositifs de mesure optique comportant deux sources lumineuses en regard disposées de part et d'autre de la lentille, ces sources produisant deux faisceaux lumineux plans dirigés respectivement vers une face avant et vers une face arrière de la lentille pour former sur chacune d'elles une tache lumineuse linéaire, des moyens de réception optique pointés vers chaque tache lumineuse, les moyens de calcul étant agencés pour calculer la cambrure de chaque face au voisinage de chaque bord à chanfreiner.

Selon un mode de réalisation, l'unité de pilotage est agencée pour activer alternativement les sources lumineuses.

Selon des dispositions particulières non limitatives :

- la ou chaque source lumineuse est écartée de l'axe de rotation du support ;
- la ou chaque source lumineuse est agencée pour que la bissectrice du faisceau lumineux soit sensiblement parallèle à l'axe de rotation du support ;
- la ou chaque source lumineuse est agencée pour que le faisceau lumineux qu'elle produit et l'axe de rotation support soient sensiblement coplanaires ;

Selon un mode de réalisation, les moyens de réception optique sont agencés pour que leur axe de pointage forme avec la bissectrice du faisceau lumineux un angle de pointage constant, non nul, dont la valeur est par exemple comprise entre 40° et 50°, en étant de préférence égale à 45°.

S'agissant des moyens de réception optique, ils sont par exemple agencés pour que leur axe de pointage se trouve dans un plan comprenant la bissectrice du faisceau lumineux et perpendiculaire au plan du faisceau lumineux ; ils peuvent comprendre un objectif dont l'axe optique est confondu avec l'axe de pointage ainsi qu'un écran que coupe l'axe de pointage et sur lequel se forme l'image de ladite tache lumineuse.

Par ailleurs, la source lumineuse est de préférence agencée pour produire un faisceau lumineux cohérent. Il s'agit par exemple d'un laser.

D'autres caractéristiques et avantages de l'invention apparaîtront à la lumière de la description qui va suivre d'un mode de réalisation donné à titre d'exemple non limitatif, description faite en référence aux dessins annexés dans lesquels :

- la figure 1 est une vue en coupe partielle d'une lentille, montée sur un arbre support rotatif, représentée au cours d'une opération de chanfreinage de son bord arrière ;
- la figure 2 est une vue schématique de détail en coupe d'une lentille au voisinage de l'un de ses bords, en l'occurrence le bord arrière, sur laquelle sont représentés, en traits interrompus, la partie usinée de la lentille et, en trait fort, un chanfrein réalisé à partir du bord au moyen d'un outil de chanfreinage dont l'arête de coupe est représentée en trait mixte ;

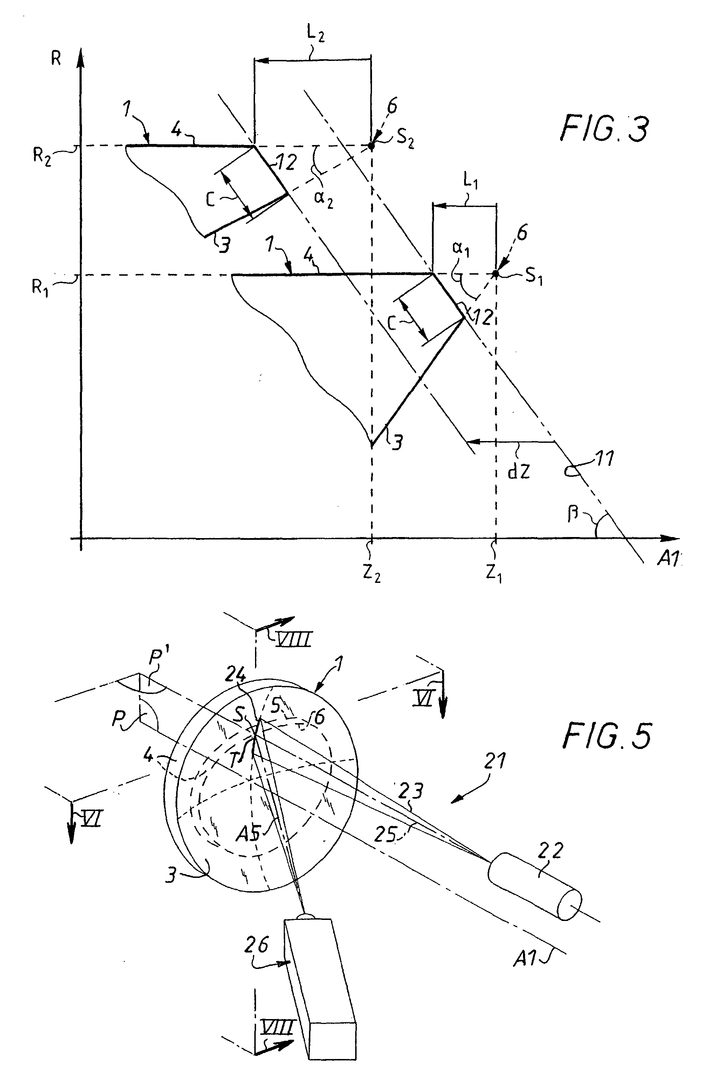

- la figure 3 est une vue schématique de détail en coupe, analogue à la figure 2, sur laquelle sont représentées deux portions d'une même lentille, décalées angulairement, mais rapportées dans le même plan de coupe confondu avec le plan de la figure ;
- la figure 4 est une vue partielle en perspective d'une machine d'usinage, qui comprend un support rotatif pour le montage d'une lentille, et deux dispositifs de mesure formés chacun d'une source lumineuse et d'un dispositif de réception optique, disposés de part et d'autre de la lentille ;
- la figure 5 est une vue de détail en perspective d'une lentille brute et de l'un des dispositifs de mesure optique de la figure 4 ;
- la figure 6 est une vue de dessus en coupe partielle de la lentille et du dispositif de mesure de la figure 5, suivant un plan de coupe matérialisé sur cette figure par le plan VI-VI ;

- la figure 7 est un schéma illustrant, en plan, l'axe d'éclairage de la source lumineuse des figures 5 et 6 ainsi que l'objectif du dispositif de réception optique et son écran ;

- la figure 8 est une vue en coupe de la lentille de la figure 5, suivant le plan de coupe VIII - VIII ; est également représenté, schématiquement, le dispositif de mesure optique ;

- la figure 9 est une vue schématique illustrant l'écran du dispositif de réception optique de la figure 6, sur lequel sont représentées, sous la forme de lignes courbes, plusieurs images de la tache lumineuse formée sur la face éclairée de la lentille ;

- la figure 10 est une vue analogue à la figure 8, suivant un autre mode de réalisation où la lentille a été préalablement meulée ;

- la figure 11 est une vue analogue à la figure 9, où apparaît l'image de la tache formée sur la lentille préalablement meulée de la figure 10.

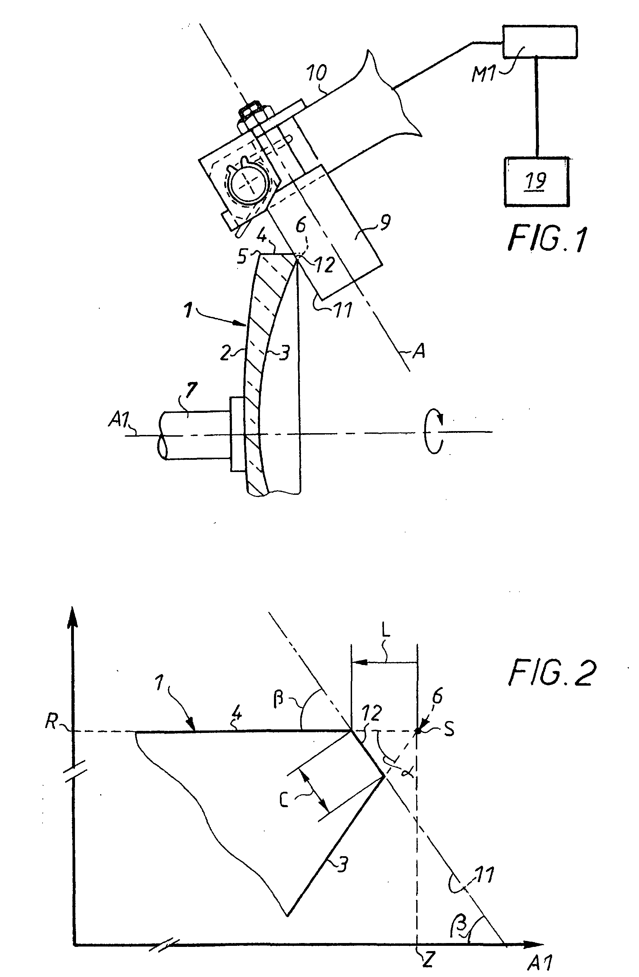

Sur la figure 1 est représentée une lentille ophtalmique 1 qui présente deux surfaces optiques constituées respectivement par une face dite avant 2 et une face dite arrière 3 opposées, reliées par une tranche 4 qui est initialement cylindrique à profil circulaire, mais qui, après une opération de meulage de la lentille 1, présente un contour correspondant à celui d'un cercle de monture de lunettes dans lequel est destinée à être montée cette lentille 1.

Après cette opération de meulage, la lentille 1 présente, à la jonction de sa tranche 4 et de sa face avant 2, un bord avant 5 et, à la jonction de sa tranche 4 et de sa face arrière 3, un bord arrière 6, le bord avant 5 et le bord arrière 6 constituant des arêtes vives que l'on souhaite casser par une opération de chanfreinage.

La lentille 1 est fixée par l'une au moins de ses faces 2, 3 sur un arbre support 7 monté à rotation autour d'un axe A1 par rapport au bâti d'une machine d'usinage 8. La lentille 1 est positionnée sur l'arbre support 7 de telle sorte que, dans tout plan de coupe contenant l'axe A1, la tranche 4 est parallèle à l'axe A1.

L'opération de chanfreinage est réalisée au moyen d'une meule abrasive 9 montée sur un support 10 mobile au moins en translation, au moyen d'un moteur M1, par rapport au bâti de la machine 8, parallèlement à l'axe A1.

Par ailleurs, la meule 9 présente une symétrie de révolution par rapport à un axe A autour duquel elle est entraînée en rotation et qui est incliné par rapport à l'axe A1.

Lors du chanfreinage, la meule 9 vient au contact de la lentille 1 par une arête de coupe 11 inclinée par rapport à l'axe A1 et formant avec celui-ci un angle β prédéterminé qui, en l'occurrence, est identique à celui formé par l'axe A de la meule 9 avec l'axe A1 puisque, compte tenu de la géométrie cylindrique de la meule 9, l'arête de coupe 11 est parallèle à l'axe A de la meule 9.

Lors du chanfreinage, l'angle β est maintenu constant, tandis que l'outil de coupe 9 est déplacé en translation parallèlement à l'axe A1 pour réaliser à partir du bord concerné (dans le mode de réalisation représenté sur la figure 1, il s'agit du bord arrière 6) un chanfrein 12 dont la valeur de la cote sur plat, notée C, soit égale à une valeur prédéterminée, constante, sur l'ensemble du pourtour de la lentille 1, et ce malgré les variations de cambrure de cette dernière.

Par "cote sur plat", on entend la largeur du chanfrein 12 (figure 2).

Pour chaque point courant, appelé sommet et noté S, du bord 5, 6 que l'on souhaite chanfreiner, l'on note :

- Z sa coordonnée suivant l'axe A1 orienté dans le sens de la normale à la face 2, 3 concernée de la lentille 1 (sur la figure 2, il s'agit de la face arrière 3),
- R sa distance à l'axe A1,
- α la cambrure locale de la lentille 1 au sommet S, c'est-à-dire l'angle, dans le plan formé par l'axe A1 et le sommet S (sur la figure 2, ce plan est confondu avec le plan de la feuille), entre la tranche 4 et la tangente au sommet S à la face 2, 3 de la lentille 1,
- L la profondeur de passe de l'outil 9 au droit du sommet S, c'est-à-dire la profondeur de matière, mesurée suivant l'axe A1 orienté, qu'il est nécessaire d'enlever à partir du sommet S pour obtenir un chanfrein 12 dont la cote sur plat C a la valeur souhaitée.

La valeur de la profondeur de passe L peut être calculée par la formule suivante :

$$L = C \cos \beta + C \sin \beta \, \frac{\cos \alpha}{\sin \alpha}$$

Soient $S_1$ et $S_2$ deux sommets successifs, décalés angulairement, du même bord 5, 6 à chanfreiner. L'on note, respectivement :

- $Z_1$ et $Z_2$ leurs coordonnées suivant l'axe A1 orienté,
- $R_1$ et $R_2$ leurs distances à l'axe A1,
- $\alpha_1$ et $\alpha_2$ leurs cambrures et,
- $L_1$ et $L_2$ leurs profondeurs de passe.

Dès lors que ces grandeurs sont connues, il est possible d'en déduire le déplacement dZ que l'on doit faire subir à la meule 9 parallèlement à l'axe A1 pour que la valeur de la cote sur plat C du chanfrein 12 soit identique au droit de chaque sommet $S_1$, $S_2$, en étant égale à la valeur prédéterminée.

La valeur de ce déplacement dZ peut en effet être calculée par la formule suivante :

$$dZ = (L_2 - L_1) + (Z_2 - Z_1) + \frac{R_2 - R_1}{\sin \beta}$$

En réitérant ce calcul à chaque instant, pour chaque position angulaire de la lentille 1, et en déplaçant l'outil 9 suivant la valeur dZ calculée, l'on obtient un chanfrein 12 dont la cote sur plat C est constante sur tout le pourtour de la lentille 1.

La valeur de l'inclinaison β de l'arête de coupe 11 et la valeur de la cote sur plat C du chanfrein 12 sont des valeurs prédéterminées, choisies en fonction de l'aspect que l'on souhaite conférer à la lentille 1.

Reste donc à obtenir, pour chaque sommet S du bord 5, 6 à chanfreiner :

- la valeur de sa coordonnée Z suivant l'axe A1,
- la valeur de sa distance R à l'axe A1 et,
- la valeur de sa cambrure α.

Comme nous allons le voir, ces valeurs sont mesurées au cours d'un relevé effectué sans contact qui peut être réalisé au sein même de la machine d'usinage 8, que l'on décrit à présent.

Cette machine 8 comporte deux arbres supports 7, 7' en vis-à-vis, entre lesquels est maintenue par pincement la lentille 1. Ces arbres supports 7, 7' sont entraînés conjointement en rotation autour de leur axe commun A1.

Les arbres supports 7, 7' sont montés sur un support mobile 13 monté pivotant sur le bâti de la machine 8, autour d'un deuxième axe A2 parallèle au premier axe A1. Compte tenu de cette cinématique, le support 13 est appelé bascule dans la suite de la description.

La machine 8 comporte en outre une biellette 14 montée articulée, d'une part, par une première extrémité 15, au bâti autour du deuxième axe A2 de la bascule 13 et, d'autre part, par une deuxième extrémité 16 autour d'un troisième axe A3 parallèle aux précédents A1, A2, à une noix 17 elle-même montée mobile en translation suivant un quatrième axe A4, communément appelé axe de restitution, perpendiculaire aux axes A1 à A3.

La noix 17 est taraudée ; elle est en prise par vissage avec une tige filetée 18 étendue suivant le quatrième axe A4 autour duquel elle est entraînée en rotation, au moyen d'un moteur M2.

Une telle machine 8 est, pour les parties 7, 7', 13 à 18, M2 qui viennent d'être décrites, bien connue de l'homme du métier car très répandue dans le commerce et ayant fait l'objet, par la demanderesse, de nombreux brevets.

L'on pourra se référer notamment à la demande de brevet français publiée sous le numéro FR-A-2 734 505.

Dans de nombreuses applications courantes d'une telle machine 8, notamment au meulage, la bascule 13 et la biellette 14 sont mobiles l'une par rapport à l'autre. Ici, l'on suppose toutefois que ces deux pièces sont solidaires.

La machine 8, qui est en pratique une machine à commande numérique, comporte en outre une unité de pilotage 19 propre à coordonner les opérations qui vont être décrites. Cette unité de pilotage est notamment reliée aux moteurs M1 et M2 qu'elle commande.

Ici, la machine 8 comporte également, pour les relevés précités à effectuer sur le bord avant 5 de la lentille 1, un premier dispositif de mesure optique 20 et, pour les relevés à effectuer sur le bord arrière 6, un second dispositif de mesure optique 21.

Ces dispositifs 20, 21 sont disposés de part et d'autre de la lentille 1, chacun comprenant une source lumineuse 22, fixée au bâti de la machine 8 et disposée en regard de l'une des faces 2, 3 de la lentille 1.

Cette source lumineuse 22 produit un faisceau lumineux 23 plan dirigé vers cette face 2, 3 de la lentille 1 pour y former une tache lumineuse 24 linéaire.

La visibilité de cette tache 24 résulte d'un phénomène de diffusion à l'impact du faisceau sur la face 2, 3 qui présente en effet une certaine rugosité.

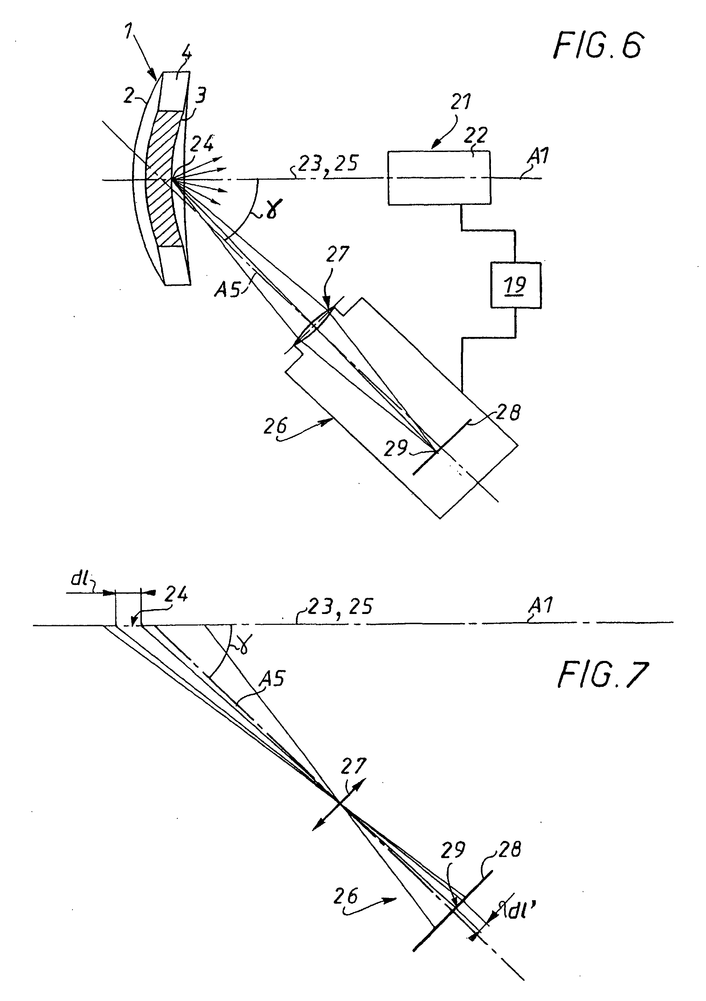

Ce phénomène de diffusion est illustré sur la figure 6 par des flèches concentriques, qui matérialisent la lumière diffusée.

Cette source lumineuse 22 est de préférence un laser, choisi pour sa précision, le faisceau lumineux 23 produit étant alors cohérent.

La source lumineuse 22 est disposée pour que le faisceau 23 soit à la fois écarté de l'axe de rotation A1 des arbres supports 7, 7' et pour que sa bissectrice 25 soit parallèle à l'axe A1, de sorte que le faisceau 23 et l'axe A1 forment conjointement un plan noté P, confondu avec le plan du faisceau 23.

Chaque dispositif 20, 21 de mesure optique comprend, en outre, des moyens de réception optique, sous la forme d'une caméra 26 munie d'un objectif 27 et d'un écran photosensible 28.

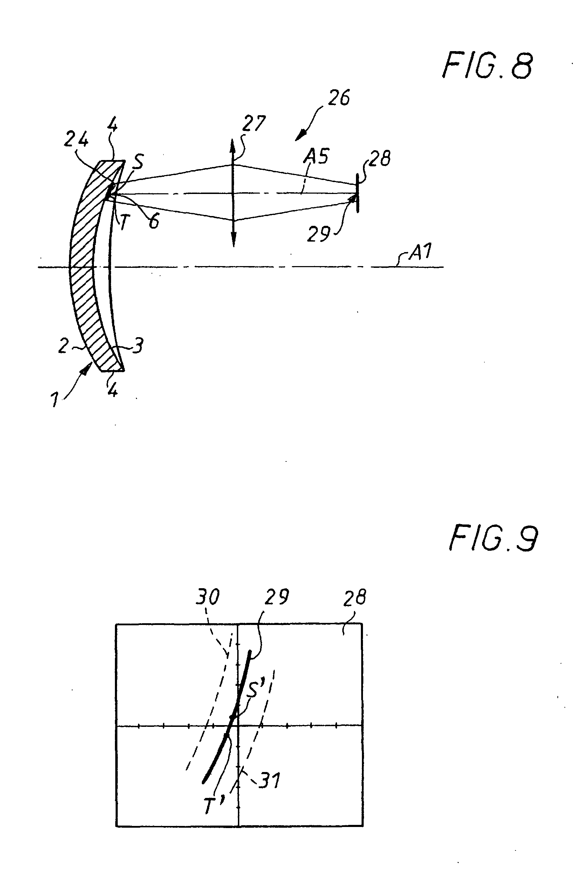

La caméra 26 est pointée vers la tache lumineuse 24. Plus précisément, cette caméra 26 présente un axe de pointage A5, confondu avec l'axe optique de son objectif 27, qui coupe le faisceau lumineux 23 sur sa bissectrice 25 au voisinage de la tache lumineuse 24, en sorte qu'il se forme une image 29 linéaire de celle-ci sur l'écran 28 (figure 9).

La caméra 26 est orientée, d'une part, pour que son axe de pointage A5 forme, conjointement avec la bissectrice 25 du faisceau lumineux 23 un plan, noté P', perpendiculaire au plan P.

Elle est d'autre part orientée pour que son axe de pointage A5 forme avec la bissectrice 25 du faisceau lumineux 26 un angle γ, dit angle de pointage, constant, non nul.

La valeur de cet angle de pointage γ est par exemple comprise entre 40° et 50°. De préférence, la valeur de l'angle de pointage γ est sensiblement égale à 45°.

Suivant un premier mode de réalisation, les relevés précités sont effectués avant le meulage de la lentille 1. Il est procédé comme suit.

La lentille 1 brute est positionnée par un pivotement de la bascule 13 jusqu'à ce que la tache lumineuse 24 coïncide avec le bord 5, 6 à former, dont on connaît déjà la projection sur un plan perpendiculaire à l'axe A1 de rotation de la lentille 1, cette projection ayant en effet été mémorisée dans l'unité de pilotage 19 lors du relevé du contour du cercle de monture.

Le mouvement de la bascule 13 est commandé par l'unité de pilotage 19 : celle-ci commande en effet le moteur M2 dont la rotation entraîne, par l'intermédiaire de la noix 17 qui suit un mouvement de translation le long de l'axe A4, le pivotement de la biellette 14 autour de l'axe A2.

La lentille 1 est alors entraînée en rotation, par l'intermédiaire des arbres 7, 7', autour de son axe A1, l'unité de pilotage 19 commandant simultanément et en continu le pivotement de la bascule 13 pour que la tache lumineuse 24 balaye la totalité du bord 5, 6 à former, la bissectrice 25 du faisceau 23 coïncidant avec lui à chaque instant, de sorte que la tache 24 est centrée en permanence sur le bord 5, 6.

Par ailleurs, compte tenu de la cambrure de la face 2, 3 éclairée, la tache lumineuse 24 se déplace, au cours de la rotation de la lentille 1, parallèlement à l'axe de rotation A1, suivant une trajectoire comprise entre deux lignes extrêmes de rebroussement dont les images 30, 31 sont représentées en traits interrompus sur la figure 9, la distance moyenne séparant ces deux lignes étant appelée profondeur de champ.

Conjointement, l'image linéaire 29 de la tache lumineuse 24 se déplace sur l'écran 28 en suivant, entre les images 30 et 31, une trajectoire qui est la projection sur l'écran 28 de la trajectoire suivie par la tache lumineuse 24.

Bien entendu, la taille de l'écran 28 et la distance de la lentille 1 à laquelle se trouve la caméra 26 sont choisies en fonction de la profondeur de champ pour que l'image 29 de la tache lumineuse 24 ne sorte jamais de l'écran 28.

Généralement, la profondeur de champ est connue par avance, de sorte qu'il est possible d'effectuer un préréglage de l'écran 28.

Un déplacement de la tache lumineuse 24 sur une distance dl le long de sa trajectoire entraîne un déplacement proportionnel de son image 29, le long de sa propre trajectoire, sur une distance dl'.

Les positions successives de chaque point de l'image 29 sur l'écran 28 sont relevées à chaque instant, pour chaque position angulaire de la lentille 1.

Des solutions connues permettent d'effectuer un tel relevé. Ainsi, l'écran 28 peut être constitué par un capteur optique matriciel de type CCD, les images 29 qui s'y forment faisant alors l'objet d'un traitement numérique classique.

Ici, la longueur d'onde du faisceau 23 émis et la plage des longueurs d'ondes transmissibles par le matériau de la lentille 1 sont choisies pour être incompatibles.

Le matériau de la lentille 1 laisse passer certains rayons UV et plus généralement tout faisceau d'une longueur d'onde minimale de 325 nm. Une source lumineuse dont la longueur d'onde est plus faible que cette valeur se comportera, face à une quelconque lentille 1, comme si celle-ci était opaque. Une diode UV ou une diode laser UV peut, à cet effet, être avantageusement employée comme source lumineuse de manière à pouvoir supprimer d'éventuelles images secondaires du faisceau 23 se formant sur les moyens de réception optiques 26, ces images se formant en plus de l'image réfléchie directement par la première surface rencontrée de la lentille, celle qui est nécessaire à la mise en oeuvre de l'invention.

Ces images secondaires peuvent provenir du fait que, lorsque le faisceau 23 émis est transmissible par la lentille 1, toute l'intensité du faisceau 23 n'est pas entièrement réfléchie par la première surface rencontrée. Un faisceau résiduel peut être diffusé à l'intérieur du verre, selon un angle de réfraction, rencontrer la face opposée à la face incidente et être alors réfléchi en tant qu'image secondaire en direction des moyens de réception optique 26. D'autres images secondaires peuvent également être formées par les réflexions multiples du faisceau 23 entre les faces du verre, le long de trajets confinés dans l'épaisseur de la lentille 1.

Suivant un mode de réalisation illustré sur la figure 7, l'écran 28 s'étend dans un plan perpendiculaire à l'axe de pointage A5, mais il peut également être incliné par rapport à celui-ci pour former un angle non droit, par exemple d'environ 45°.

Un simple calcul de moyenne permet de sélectionner un point intermédiaire S' sur l'image 29, qui correspond au sommet S courant, intersection de la tache 24 avec le bord 5, 6 à former.

Pour chaque point S' image du sommet S, on sélectionne également, conjointement, sur l'image 29, un second point T' qui correspond, sur la face éclairée 2, 3 de la lentille 1, à un point T de la tache lumineuse 24 et qui, décalé par rapport au bord 5, 6 vers le centre de la lentille 1, se trouve à faible distance de celui-ci, c'est-à-dire à une distance dont la valeur est inférieure à 2 mm, de préférence inférieure ou égale à 1 mm.

Par triangulation, on calcule, à partir des coordonnées de leurs images sur l'écran 28, les coordonnées respectives de ces deux points réels S et T suivant l'axe A1, ainsi que leurs distances respectives à cet axe.

On calcule alors l'angle formé par la droite reliant ces deux points réels S, T avec l'axe A1, cet angle étant égal à la cambrure $\alpha$ de la face éclairée 2, 3 de la lentille au sommet S.

L'unité de pilotage 19 comprend un calculateur agencé pour effectuer les calculs présentés ci-dessus, et dans lequel ont notamment été programmées les formules fournissant la profondeur de passe L et le déplacement dZ.

Les résultats des calculs sont mémorisés, pour chaque position angulaire de la lentille 1, dans l'unité de pilotage 19, en sorte qu'à la suite d'une révolution complète de la lentille 1, il est stocké dans l'unité de pilotage 19 un ensemble de données formant une modélisation numérique de la forme tridimensionnelle du bord 5, 6 à former avec, pour chaque point S du bord 5, 6, la cambrure $\alpha$ correspondante de la face 2, 3 de la lentille 1.

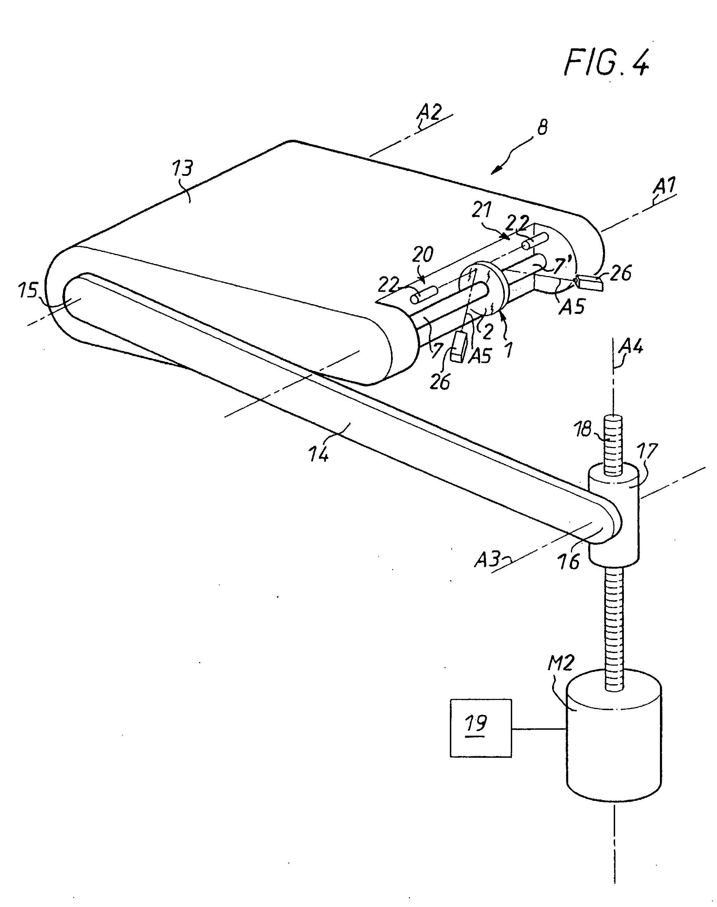

Suivant un mode de réalisation illustré sur la figure 4, les dispositifs 20, 21 de mesure optique sont disposés symétriquement par rapport à la lentille 1, de sorte que leurs sources lumineuses 22 sont situées en regard l'une de l'autre, les faisceaux qu'elles produisent étant coplanaires.

Pour obtenir un relevé du bord avant 5 et du bord arrière 6 et de leurs cambrures $\alpha$ respectives, on peut procéder de deux manières différentes au moins.

D'une part, il est possible d'effectuer une première révolution complète de la lentille 1, lors de laquelle on active l'une des sources 22 pour effectuer les relevés sur l'un des bords 5, 6, puis une deuxième révolution complète, lors de laquelle on active l'autre source lumineuse 22 pour effectuer les relevés sur l'autre bord 5, 6.

D'autre part, en variante, il est possible d'effectuer une unique révolution complète de la lentille 1, lors de laquelle, pour chaque position angulaire de celle-ci, on active alternativement chacune des deux sources lumineuses 22 pour effectuer les relevés simultanément sur les deux bords 5, 6 sans que la source lumineuse 22 du premier dispositif de mesure 20 ne vienne brouiller, par un phénomène de réfraction, les relevés effectués par le deuxième dispositif 21, et réciproquement.

Concrètement, ces activations alternées se traduisent par des clignotements en opposition de phase des deux sources lumineuses 22.

Le procédé qui vient d'être décrit permet, comme nous l'avons vu, d'effectuer les relevés sur les bords avant 5 et arrière 6 fictifs, puisque ceux-ci n'ont pas encore été obtenus, la lentille 1 étant brute.

Mais, selon un deuxième mode de réalisation, ce procédé peut être adapté, moyennant quelques modifications mineures, aux relevés sur les bords avant 5 et arrière 6 réels, après que la lentille 1 a été meulée.

Il n'est alors pas nécessaire de piloter les mouvements de la bascule 13 en fonction de la forme relevée du cercle de monture.

Il suffit d'entraîner en rotation la lentille 1 meulée, autour de son axe A1, et d'éclairer la face 2, 3 de la lentille 1 en veillant à ce que la tache lumineuse 24 couvre toujours le bord 5, 6 formé, quelle que soit la position angulaire de la lentille 1.

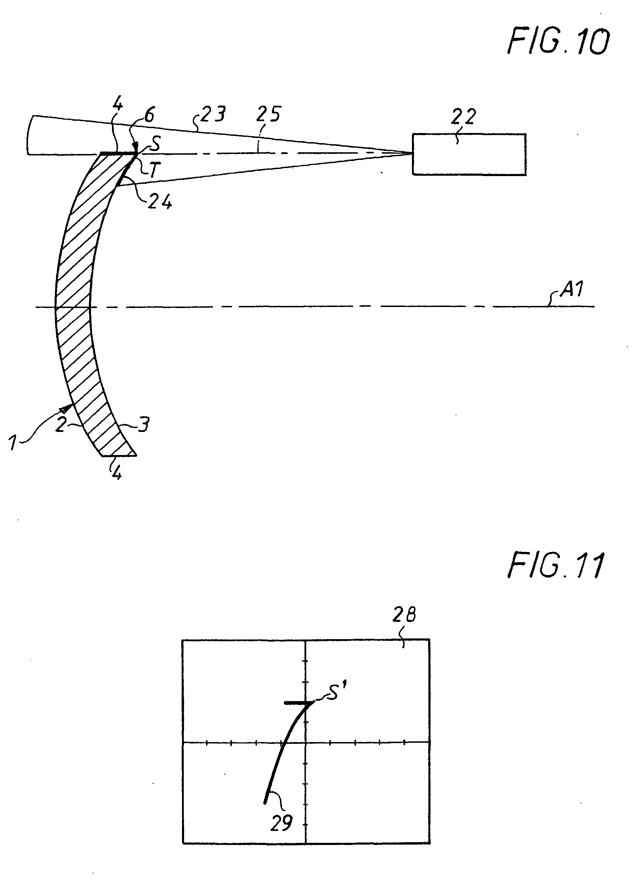

L'on obtient alors sur l'écran 28 une image brisée présentant un point de rebroussement qui est l'image S' du sommet S courant (figure 11).

Les opérations suivantes, à savoir :

- la sélection de l'image T' du point voisin T,
- le calcul des coordonnées des points réels S et T,
- le calcul de la cambrure au sommet S,

sont effectuées comme précédemment décrit pour le premier mode de réalisation.

Quel que soit le mode de réalisation choisi, les mesures optiques qui viennent d'être décrites présentent une précision nettement supérieure aux mesures mécaniques classiques, au bénéfice de la précision de chanfreinage.

Par ailleurs, on a vu qu'il est possible d'effectuer les relevés en une seule révolution de lentille pour chaque face, voire pour les deux faces simultanément.

Il en résulte une diminution des temps de cycle, au bénéfice de la productivité.

En outre, l'emploi d'un faisceau lumineux plan est particulièrement avantageuse, car si la présence d'impuretés sur le trajet du faisceau provoque l'apparition de discontinuités dans l'image 29, il est possible de restituer une image continue au moyen d'un simple calcul d'interpolation.

## Revendications

1. Procédé pour chanfreiner au moins un bord (5, 6) d'une face optique (2, 3) d'une lentille ophtalmique (1), qui comporte une étape de relevé dans laquelle on relève les cambrures successives ($\alpha$) de la face optique (2, 3) au voisinage et le long du bord (5, 6) à chanfreiner, **caractérisé en ce que**, dans l'étape de relevé, on balaye le bord (5, 6) à chanfreiner au moyen d'un faisceau lumineux (23) plan formant sur la face optique (2, 3) une tache lumineuse (24) linéaire, on forme simultanément, sur des moyens de réception optique (26), une image (29) de la tache lumineuse (24), on déduit des positions successives de cette image (29) les cambrures successives ($\alpha$) de la face optique (2, 3) au voisinage du bord (5, 6), et **en ce qu'**il comporte une étape de chanfreinage dans laquelle on amène la lentille (1), entraînée en rotation autour d'un axe (A1), en contact par son bord (5, 6) avec un outil de chanfreinage (9), et on pilote le positionnement relatif de la lentille (1) et de l'outil (9) en fonction des relevés effectués.

2. Procédé selon la revendication 1 **caractérisé en ce que**, dans l'étape de relevé, on sélectionne sur l'image (29) de la tache un premier point (S'), image du point (S), appelé sommet, du bord (5, 6) éclairé, et un deuxième point (T'), image d'un point (T) de la face optique (2, 3), voisin dudit sommet (S), et on déduit de leurs positions respectives la cambrure ($\alpha$) de la face optique (2, 3) au sommet (S).

3. Procédé selon la revendication 2, **caractérisé en**

**ce que**, dans l'étape de relevé, on déduit des positions de leurs images (S', T') sur les moyens de réception optique (28), les coordonnées respectives du sommet (S) et du point voisin (T) suivant l'axe de rotation (A1) de la lentille (1), ainsi que leurs distances respectives à l'axe (A1).

4. Procédé selon la revendication 3, **caractérisé en ce que** ladite déduction est effectuée au moyen d'un calcul par triangulation.

5. Procédé selon la revendication 3 ou 4, **caractérisé en ce que**, dans l'étape de relevé, on déduit des coordonnées respectives du sommet (S) et du point voisin (T) et de leurs distances à l'axe (A1) la cambrure ($\alpha$) de la face optique (2, 3) au sommet (S) en calculant l'angle formé par la droite reliant ces deux points (S, T) et l'axe de rotation (A1) de la lentille (1).

6. Procédé selon la revendication 5, **caractérisé en ce que**, dans l'étape de chanfreinage, entre une première et une deuxième positions angulaires successives de la lentille (1), on fait subir à l'outil de chanfreinage (9), parallèlement à l'axe de rotation (A1) de la lentille (1), un déplacement dZ dont la valeur est fournie par la formule suivante :

$$dZ = (L_2 - L_1) + (Z_2 - Z_1) + \frac{R_2 - R_1}{\sin \beta}$$

où

- $Z_1$ et $Z_2$ sont les coordonnées des sommets ($S_1$, $S_2$) correspondant respectivement à la première et à la deuxième positions angulaires de la lentille (1), suivant l'axe de rotation (A1) de la lentille (1),
- $R_1$ et $R_2$ sont leurs distances respectives à l'axe (A1),
- $\alpha_1$ et $\alpha_2$ sont leurs cambrures respectives,
- $L_1$ et $L_2$ les profondeurs de passe de l'outil (9) au droit des sommets ($S_1$, $S_2$).

7. Procédé selon la revendication 6, **caractérisé en ce que**, en un sommet (S) donné du bord (5, 6) à chanfreiner, la profondeur de passe (L) est calculée au moyen de la formule suivante :

$$L = C \cos \beta + C \sin \beta \, \frac{\cos \alpha}{\sin \alpha}$$

où

- C est la cote sur plat, prédéterminée, du chanfrein (12) à former,
- $\alpha$ est la cambrure de la face optique (2, 3) au sommet (S),

- $\beta$ est l'angle entre l'arête de coupe (11) de l'outil (9) et l'axe de rotation (A1) de la lentille (1).

8. Procédé selon l'une revendications 1 à 7, **caractérisé en ce que**, la lentille (1) présentant un bord avant (5) sur une face avant (2) et un bord arrière (6) sur une face arrière (3), on balaye chaque bord (5, 6), dans l'étape de relevé, au moyen de deux faisceaux lumineux plans (23) formant respectivement sur chacune des faces (2, 3) une tache lumineuse linéaire (24), on forme simultanément, sur des moyens de réception optique (28) pointés vers chaque tache lumineuse (24) une image (29) de celle-ci, et on déduit des positions successives de chaque image (29) les cambrures successives de la face avant (2) au voisinage du bord avant (5) et celles de la face arrière (3) au voisinage du bord arrière (6).

9. Procédé selon la revendication 8, **caractérisé en ce que**, dans l'étape de relevé, on active chaque faisceau lumineux (23) alternativement pour chaque position angulaire de la lentille (1).

10. Procédé selon l'une des revendications précédentes, **caractérisé en ce que** le ou chaque faisceau lumineux (23) est écarté de l'axe de rotation (A1) de la lentille (1).

11. Procédé selon la revendication 10, **caractérisé en ce que** ledit faisceau lumineux (23) présente une bissectrice (25) sensiblement parallèle à l'axe de rotation (A1) de la lentille (1).

12. Procédé selon la revendication 10, **caractérisé en ce que** les moyens de réception optique (28) présentent un axe de pointage optique (A5) formant avec la bissectrice (25) du faisceau lumineux (23) un angle de pointage ($\gamma$) constant, non nul.

13. Procédé selon l'une des revendications précédentes, **caractérisé en ce que** le faisceau lumineux (23) et l'axe de rotation (A1) de la lentille (1) sont sensiblement coplanaires.

14. Procédé selon la revendication 13, **caractérisé en ce que** la valeur de l'angle de pointage ($\gamma$) est comprise entre 40° et 50°.

15. Procédé selon la revendication 14, **caractérisé en ce que** la valeur de l'angle de pointage ($\gamma$) est sensiblement égale à 45°.

16. Procédé selon l'une des revendications 13 à 15, **caractérisé en ce que** l'axe de pointage (A5) forme avec la bissectrice (25) du faisceau lumineux (23) un plan (P') perpendiculaire au plan (P) du faisceau lumineux (23).

**17.** Procédé selon l'une des revendications précédentes, **caractérisé en ce que** ledit faisceau lumineux (23) est cohérent.

**18.** Procédé selon la revendication 17, **caractérisé en ce que** ledit faisceau lumineux (23) est un laser.

**19.** Procédé selon l'une des revendications 1 à 18, **caractérisé en ce que** la longueur d'onde du faisceau lumineux (23) a une valeur située en dehors de la plage des longueurs d'ondes transmissibles par la lentille ophtalmique (1).

**20.** Procédé selon l'une des revendications 1 à 19, **caractérisé en ce que** la longueur d'onde du faisceau lumineux (23) a une valeur inférieure à 325 nm.

**21.** Procédé selon la revendication 19 ou 20, **caractérisé en ce que** le faisceau lumineux (23) est issu d'une diode UV.

**22.** Machine (8) pour chanfreiner un bord (5, 6) d'une face optique (2, 3) d'une lentille (1) ophtalmique, cette machine (8) comportant un support rotatif (7, 7') pour le montage de la lentille (1), un outil de chanfreinage (9), des moyens (M1) pour déplacer l'un par rapport à l'autre le support (7, 7') et l'outil (9) suivant une direction parallèle à l'axe de rotation (A1) du support (7, 7'), une unité de pilotage (19) adaptée à commander lesdits moyens de déplacement (M1), **caractérisée en ce qu'**elle comporte au moins un dispositif de mesure optique (20, 21) comprenant une source lumineuse (22) produisant un faisceau lumineux (23) plan dirigé vers ladite face optique (2, 3) pour y former une tache lumineuse (24) linéaire croisant le bord (5, 6) à chanfreiner, des moyens de réception optique (26) pointés vers ladite tache lumineuse (24) et reliés à ladite unité de pilotage (19), celle-ci comportant des moyens pour calculer la cambrure (α) de ladite face (2, 3) au voisinage du bord (5, 6) à chanfreiner en fonction des relevés effectués sur les moyens de réception optique (26).

**23.** Machine suivant la revendication 22, **caractérisée en ce qu'**elle comporte deux dispositifs de mesure optique (20, 21) comportant deux sources lumineuses (22) en regard disposées de part et d'autre de la lentille (1), ces sources (22) produisant deux faisceaux lumineux (23) plans dirigés respectivement vers une face avant (2) et vers une face arrière (3) de la lentille (1) pour former sur chacune d'elles une tache lumineuse (24) linéaire, des moyens de réception optique (26) pointés vers chaque tache lumineuse (24), lesdits moyens de calcul étant agencés pour calculer la cambrure (α) de chaque face (2, 3) au voisinage de chaque bord (5, 6) à chanfreiner.

**24.** Machine selon la revendication 22 ou 23, **caractérisée en ce que** l'unité de pilotage est agencée pour activer alternativement les sources lumineuses.

**25.** Machine selon l'une des revendications 22 à 24, **caractérisée en ce que** la ou chaque source lumineuse (22) est écartée de l'axe de rotation (A1) du support (7, 7').

**26.** Machine selon l'une des revendications 22 à 25, **caractérisée en ce que** la ou chaque source lumineuse (22) est agencée pour que la bissectrice (25) du faisceau lumineux (23) soit sensiblement parallèle à l'axe de rotation (A1) du support (7, 7').

**27.** Machine selon l'une des revendications 22 à 26, **caractérisée en ce que** la ou chaque source lumineuse (22) est agencée pour que le faisceau lumineux (23) qu'elle produit et l'axe de rotation (A1) du support (7, 7') soient sensiblement coplanaires.

**28.** Machine selon l'une des revendications 22 à 27, **caractérisée en ce que** les moyens de réception optique (26) sont agencés pour que leur axe de pointage (A5) forme avec la bissectrice (25) du faisceau lumineux (23) un angle de pointage (γ) constant, non nul.

**29.** Machine selon la revendication 28, **caractérisée en ce que** les moyens de réception optique (26) sont agencés pour que la valeur de l'angle de pointage (γ) soit comprise entre 40° et 50°.

**30.** Machine selon la revendication 29, **caractérisée en ce que** les moyens de réception optique (26) sont agencés pour que la valeur de l'angle de pointage (γ) soit sensiblement égale à 45°.

**31.** Machine selon l'une des revendications 28 à 30, **caractérisée en ce que** les moyens de réception optique (26) sont agencés pour que leur axe de pointage (A5) se trouve dans un plan (P') comprenant la bissectrice du faisceau lumineux (23) et perpendiculaire au plan (P) du faisceau lumineux (23).

**32.** Machine selon l'une des revendications 22 à 31, **caractérisée en ce que** les moyens de réception optique (26) comprennent un objectif (27) dont l'axe optique est confondu avec l'axe de pointage (A5) ainsi qu'un écran (28) que coupe l'axe de pointage (A5) et sur lequel se forme l'image (29) de ladite tache lumineuse (24).

**33.** Machine selon l'une des revendications 22 à 32, **caractérisée en ce que** ladite source lumineuse (22) est agencée pour produire un faisceau lumineux (23) cohérent.

**34.** Machine selon la revendication 33, **caractérisée en ce que** ladite source lumineuse (22) est un laser.

**35.** Machine selon l'une des revendications 22 à 34, **caractérisée en ce que** la longueur d'onde du faisceau lumineux (23) a une valeur située en dehors de la plage des longueurs d'ondes transmissibles par la lentille ophtalmique (1).

**36.** Machine selon l'une des revendications 22 à 35, **caractérisée en ce que** la longueur d'onde du faisceau lumineux (23) a une valeur inférieure à 325 nm.

**37.** Machine selon la revendication 35 ou 36, **caractérisée en ce que** la source lumineuse (22) est une diode UV.

**Claims**

**1.** Process for bevelling at least one edge (5, 6) of an optical face (2, 3) of an ophthalmic lens (1), which includes a plotting stage in which the successive curvatures ($\alpha$) of the optical face (2, 3) are plotted in the vicinity of and along the edge (5, 6) to be bevelled, **characterized in that**, in the plotting stage, the edge (5, 6) to be bevelled is scanned using a flat light beam (23) forming a linear light spot (24) on the optical face (2, 3), an image (29) of the light spot (24) is simultaneously formed on optical reception means (26), the successive curvatures ($\alpha$) of the optical face (2,3) are deduced in the vicinity of the edge (5, 6) from the successive positions of this image (29), and **in that** it includes a bevelling stage in which the lens (1), rotated about an axis (A1), is brought into contact by its edge (5, 6) with a bevelling tool (9), and the relative positioning of the lens (1) and of the tool (9) is controlled according to the plots produced.

**2.** Process according to claim 1 **characterized in that**, in the plotting stage, there is selected on the image (29) of the spot a first point (S'), image of the point (S), called peak, of the illuminated edge (5, 6), and a second point (T'), image of a point (T) of the optical face (2, 3), next to said peak (S), and the curvature ($\alpha$) of the optical face (2, 3) at the peak (S) is deduced from their respective positions.

**3.** Process according to claim 2, **characterized in that**, in the plotting stage, the respective coordinates of the peak (S) and of the neighbouring point (T) along the rotational axis (A1) of the lens (1) are deduced from the positions of their images (S', T') on the optical reception means (28), as well as their respective distances from the axis (A1).

**4.** Process according to claim 3, **characterized in that** said deduction is carried out using a calculation by triangulation.

**5.** Process according to claim 3 or 4, **characterized in that**, in the plotting stage, the curvature ($\alpha$) of the optical face (2, 3) at the peak (S) is deduced from the respective coordinates of the peak (S) and of the neighbouring point (T) and from their distances from the axis (A1), by calculating the angle formed by the straight line connecting these two points (S, T) and the rotational axis (A1) of the lens (1).

**6.** Process according to claim 5, **characterized in that**, in the bevelling stage, between a first and a second successive angular position of the lens (1), the bevelling tool (9) is subjected, parallel to the rotational axis (A1) of the lens (1), to a displacement dZ the value of which is provided by the following formula:

$$dZ = (L_2 - L_1) + (Z_2 - Z_1) + \frac{R_2 - R_1}{\sin \beta}$$

where

- $Z_1$ and $Z_2$ are the coordinates of the peaks ($S_1$, $S_2$) corresponding respectively to the first and second angular positions of the lens (1), along the rotational axis (A1) of the lens (1),
- $R_1$ and $R_2$ are their respective distances from the axis (A1),
- $\alpha_1$ and $\alpha_2$ are their respective curvatures,
- $L_1$ and $L_2$ are the depths of cut of the tool (9) at right angles to the peaks ($S_1$, $S_2$).

**7.** Process according to claim 6, **characterized in that**, in a given peak (S) of the edge (5, 6) to be bevelled, the depth of cut (L) is calculated by means of the following formula:

$$L = C \cos \beta + C \sin \beta \, \frac{\cos \alpha}{\sin \alpha}$$

where

- C is the value across the flat, predetermined, of the bevel (12) to be formed,
- $\alpha$ is the curvature of the optical face (2, 3) at the peak (S),
- $\beta$ is the angle between the cutting edge (11) of the tool (9) and the rotational axis (A1) of the lens (1).

**8.** Process according to one of claims 1 to 7, **characterized in that**, the lens (1) presenting a front edge (5) on a front face (2) and a rear edge (6) on a rear face (3), each edge (5, 6) is scanned, in the plotting stage, using two flat light beams (23) forming respectively a linear light spot (24) on each of the faces (2, 3), there is formed simultaneously, on optical reception means (28) pointed towards each light spot (24), an image (29) of the latter, and the successive curvatures of the front face (2) in the vicinity of the front edge (5) and those of the rear face (3) in the vicinity of the rear edge (6) are deduced from the successive positions of each image (29)

9. Process according to claim 8, **characterized in that**, in the plotting stage, each light beam (23) is activated alternately for each angular position of the lens (1).

10. Process according to one of the previous claims, **characterized in that** the or both light beam (23) is separated from the rotational axis (A1) of the lens (1).

11. Process according to claim 10, **characterized in that** said light beam (23) presents a bisector (25) approximately parallel to the rotational axis (A1) of the lens (1).

12. Process according to claim 10, **characterized in that** the optical reception means (28) has an optical sight axis (A5) forming with the bisector (25) of the light beam (23) a constant sight angle (γ), which is not zero.

13. Process according to one of the previous claims, **characterized in that** the light beam (23) and the rotational axis (A1) of the lens (1) are approximately coplanar.

14. Process according to claim 13, **characterized in that** the value of the sight angle (γ) is between 40° and 50°.

15. Process according to claim 14, **characterized in that** the value of the sight angle (γ) is approximately equal to 45°.

16. Process according to one of claims 13 to 15, **characterized in that** the sight axis (A5) forms with the bisector (25) of the light beam (23) a plane (P') perpendicular to the plane (P) of the light beam (23).

17. Process according to one of the previous claims, **characterized in that** said light beam (23) is coherent.

18. Process according to claim 17, **characterized in that** said light beam (23) is a laser.

19. Process according to one of claims 1 to 18, **char-**

**acterized in that** the wavelength of the light beam (23) has a value situated outside the range of the wavelengths that can be transmitted by the ophthalmic lens (1).

20. Process according to one of claims 1 to 19, **characterized in that** the wavelength of the light beam (23) has a value of less than 325 nm.

21. Process according to claim 19 or 20, **characterized in that** the light beam (23) originates from a UV diode.

22. Machine (8) for bevelling an edge (5, 6) of an optical face (2, 3) of an ophthalmic lens (1), this machine (8) including a rotary support (7, 7') for the mounting of the lens (1), a bevelling tool (9), means (M1) for displacing the support (7, 7') and the tool (9) with respect to each other in a direction parallel to the rotational axis (A1) of the support (7, 7'), a control unit (19) suitable for controlling said means of displacement (M1), **characterized in that** it includes at least one optical measurement device (20, 21) containing a light source (22) producing a flat light beam (23) directed towards said optical face (2, 3) in order to form there a linear light spot (24) crossing the edge (5, 6) to be bevelled, optical reception means (26) pointed towards said light spot (24) and connected to said control unit (19), the latter including means for calculating the curvature (α) of said face (2, 3) in the vicinity of the edge (5, 6) to be bevelled according to the plots produced on the optical reception means (26).

23. Machine according to claim 22, **characterized in that** it includes two optical measurement devices (20, 21) containing two opposite-facing light sources (22) arranged on either side of the lens (1), these sources (22) producing two flat light beams (23) directed respectively towards a front face (2) and towards a rear face (3) of the lens (1) in order to form a linear light spot (24) on each of them, optical reception means (26) pointed towards each light spot (24), said means of calculation being set up to calculate the curvature (α) of each face (2, 3) in the vicinity of each edge (5, 6) to be bevelled.

24. Machine according to claim 22 or 23, **characterized in that** the control unit is set up to activate the light sources alternately.

25. Machine according to one of claims 22 to 24, **characterized in that** the or both light source (22) is separated from the rotational axis (A1) of the support (7, 7').

26. Machine according to one of claims 22 to 25, **characterized in that** the or both light source (22) is set up in order that the bisector (25) of the light beam (23) is approximately parallel to the rotational axis (A1) of the support (7, 7').

27. Machine according to one of claims 22 to 26, **characterized in that** the or both light source (22) is set up in order that the light beam (23) that it produces and the rotational axis (A1) of the support (7, 7') are approximately coplanar.

28. Machine according to one of claims 22 to 27, **characterized in that** the optical reception means (26) are set up in order that their sight axis (A5) forms with the bisector (25) of the light beam (23) a constant sight angle ($\gamma$), which is not zero.

29. Machine according to claim 28, **characterized in that** the optical reception means (26) are set up in order that the value of the sight angle ($\gamma$) is between 40° and 50°.

30. Machine according to claim 29, **characterized in that** the optical reception means (26) are set up in order that the value of the sight angle ($\gamma$) is approximately equal to 45°.

31. Machine according to one of claims 28 to 30, **characterized in that** the optical reception means (26) are set up in order that their sight axis (A5) is situated in a plane (P') containing the bisector of the light beam (23) and perpendicular to the plane (P) of the light beam (23).

32. Machine according to one of claims 22 to 31, **characterized in that** the optical reception means (26) include an objective lens (27) the optical axis of which is coincident with the sight axis (A5) as well as a screen (28) that is cut by the sight axis (A5) and on which the image (29) of said light spot (24) forms.

33. Machine according to one of claims 22 to 32, **characterized in that** said light source (22) is set up to produce a coherent light beam (23).

34. Machine according to claim 33, **characterized in that** said light source (22) is a laser.

35. Machine according to one of claims 22 to 34, **characterized in that** the wavelength of the light beam (23) has a value situated outside the range of the wavelengths that can be transmitted by the ophthalmic lens (1).

36. Machine according to one of claims 22 to 35, **characterized in that** the wavelength of the light beam (23) has a value of less than 325 nm.

37. Machine according to claim 35 or 36, **characterized in that** the light source (23) is a UV diode.

**Patentansprüche**

1. Verfahren zum Entgraten von zumindest einem Rand (5, 6) einer optischen Fläche (2, 3) einer ophtalmischen Linse (1), umfassend einen Schritt des Erfassens, in welchem die sukzessiven Krümmungen ($\alpha$) der optischen Fläche (2, 3) benachbart und entlang des Randes (5, 6) der zu entgraten ist, erfasst werden, **dadurch gekennzeichnet, dass** in dem Schritt der Erfassung der zu entgratende Rand (5, 6) mittels eines planen Lichtstrahles (23) überstrichen wird, an der optischen Fläche (2, 3) einen linearen Lichtfleck (24) ausbildend, wobei gleichzeitig an optischen Empfangsmitteln (26) ein Bild (29) des Leuchtfleckes (24) erzeugt wird, in sukzessiven Positionen des Bildes (29) sukzessive Krümmungen ($\alpha$) der optischen Fläche (2, 3) benachbart des Randes (5, 6) gefolgert werden, und dass das Verfahren einen Schritt des Entgratens umfasst, in welchem die Linse (1), rotationsmäßig um eine Achse (A1) angetrieben mit ihrem Rand (5, 6) in Berührung gebracht wird bezüglich eines Entgratungswerkzeuges (9), wobei die Relativpositionierung des Linse (1) und des Werkzeuges (9) in Abhängigkeit des durchgeführten Erfassung gesteuert wird.

2. Verfahren nach Anspruch 1, **dadurch gekennzeichnet, dass** in dem Erfassungsschritt an dem Bild (29) des Fleckes ein erster Punkt (S') gewählt wird, Abbildung des Punktes (S), Scheitel genannt, von dem Rand (5, 6), der beleuchtet ist, sowie ein zweiter Punkt (T'), Abbild eines Punktes (T) der optischen Fläche (2, 3), benachbart zu dem Scheitel (S), wobei aus deren jeweiligen Positionen die Krümmung ($\alpha$) der optischen Fläche (2, 3) am Scheitel (S) gefolgert wird.

3. Verfahren nach Anspruch 2, **dadurch gekennzeichnet, dass** in dem Schritt der Erfassung aus den Positionen der Bilder (S', T') an den optischen Empfangsmitteln (28) jeweilige Koordinaten des Scheitels (S) und des benachbarten Punktes (T) gemäß der Rotationsachse (A1) der Linse (1) gefolgert werden, wie auch deren jeweilige Abstände zur Achse (A1).

4. Verfahren nach Anspruch 3, **dadurch gekennzeichnet, dass** die Folgerung mittels einer Triangulierungsberechnung durchgeführt wird.

5. Verfahren nach Anspruch 3 oder 4, **dadurch gekennzeichnet, dass** in dem Erfassungsschritt die jeweiligen Koordinaten des Scheitels (S) und des benachbarten Punktes (T) und aus deren Abständen zur Achse (A1) die Krümmung ($\alpha$) der optischen Fläche (2, 3) am Scheitel (S) gefolgert wird, indem der Winkel berechnet wird, gebildet von der Geraden, die die zwei Punkte (S, T) verbindet und die Rotationsachse (A1) der Linse (1).

6. Verfahren nach Anspruch 5, **dadurch gekennzeichnet, dass** in dem Entgratungsschritt zwischen einer ersten und einer zweiten sukzessiven Winkelposition der Linse (1) das Entgratungswerkzeug (9) parallel zur Rotationsachse (A1) der Linse (1) eine Versetzung (dZ) erfährt, deren Wert bereitgestellt ist durch die folgende Gleichung:

$$dZ = (L_2 - L_1) + (Z_2 - Z_1) + (R_2 - R_1)/\sin\beta$$

wobei

- $Z_1$ und $Z_2$ die Koordinaten der Scheitel (S1, S2) sind, jeweils entsprechend der ersten und der zweiten Winkelposition der Linse (1), gemäß der Rotationsachse (A1) der Linse (1),
- R1 und R2, deren jeweilige Abstände zur Achse (A1) sind,
- $\alpha$1 und $\alpha$2, deren jeweilige Krümmungen sind,
- $L_1$ und $L_2$ Durchtrittstiefen des Werkzeuges (9) bezüglich der Scheitel (S1, S2) sind.

7. Verfahren nach Anspruch 6, **dadurch gekennzeichnet, dass** an einem gegebenen Scheitel (S) des Randes (5, 6), der zu entgraten ist, die Durchtrittstiefe (L) errechnet ist mittels der folgenden Gleichung:

$$L = C \cos\beta + C \sin\beta \cos\alpha/\sin\alpha$$

wobei

- C die vorbestimmte Schrägstellung der zu bildenden Entgratung (12) ist,
- $\alpha$ die Krümmung der optischen Fläche (2, 3) am Scheitel (S) ist,
- $\beta$ der Winkel zwischen dem Schneidgrat (11) der Werkzeuges (9) und der Rotationsachse (A1) der Linse (1) ist.

8. Verfahren nach einem der Ansprüche 1 bis 7, **dadurch gekennzeichnet, dass** die Linse (1) einen vorderen Rand (5) an der vorderen oder Frontfläche (2) und einen hinteren Rand (6) an der hinteren oder Heckfläche (3) aufweist, wobei jeder Rand (5, 6) in dem Erfassungsschritt mittels zweier planarer Lichtstrahle (2, 3) überstrichen wird, jeweils an jeder der Flächen (2, 3) einen linearen Leuchtfleck (24) ausbildend, wobei gleichzeitig an den optischen Empfangsmitteln (28), gerichtet zu jedem Leuchtfleck (24) ein Abbild (29) davon erzeugt wird, wobei sukzessive Positionen von jedem Bild (29) es erlauben, sukzessive Krümmungen der vorderen Fläche (2) benachbart des vorderen Randes (5) und jener der hinteren Fläche (3) benachbart im hinteren Rand (6) ermöglichen.

9. Verfahren nach Anspruch 8, **dadurch gekennzeichnet, dass** in dem Erfassungsschritt jeder Lichtstrahl (23) alternierend für jede Winkelposition der Linse (1) aktiviert wird.

10. Verfahren nach einem der vorangegangenen Ansprüche, **dadurch gekennzeichnet, dass** der oder jeder Lichtstrahl (23) beabstandet ist von der Rotationsachse (A1) der Linse (1).

11. Verfahren nach Anspruch 10, **dadurch gekennzeichnet, dass** der Lichtstrahl (23) eine Halbierungslinie (25) aufweist, im Wesentlichen parallel zur Rotationsachse (A1) der Linse (1).

12. Verfahren nach Anspruch 10, **dadurch gekennzeichnet, dass** die optischen Empfangsmittel (28) eine optischen Richtachse (A5) aufweisen, mit der Halbierungslinie (25) des Lichtstrahles (23) einen Richtwinkel ($\gamma$) bilden, der konstant nicht 0 ist.

13. Verfahren nach einem der vorangegangenen Ansprüche, **dadurch gekennzeichnet, dass** der Lichtstrahl (23) und die Rotationsachse (A1) der Linse (1) im Wesentlichen koplanar sind.

14. Verfahren nach Anspruch 13, **dadurch gekennzeichnet, dass** der Wert des Richtwinkels ($\gamma$) enthalten ist zwischen 40° und 50°.

15. Verfahren nach Anspruch 14, **dadurch gekennzeichnet, dass** der Wert des Richtwinkels ($\gamma$) im Wesentlichen gleich zu 45° ist.

16. Verfahren nach einem der Ansprüche 13 bis 15, **dadurch gekennzeichnet, dass** die Richtachse (A5) mit der Halbierungsgeraden (25) des Lichtstrahles (23) eine Ebene (P') bildet, senkrecht verlaufend bezüglich der Ebene (P) des Lichtstrahles bzw. Bündels (23).

17. Verfahren nach einem der vorangegangenen Ansprüche, **dadurch gekennzeichnet, dass** der Lichtstrahl (23) kohärent ist.

18. Verfahren nach Anspruch 17, **dadurch gekennzeichnet, dass** der Lichtstrahl (23) ein Laser ist.

19. Verfahren nach einem der Ansprüche 1 bis 18, **dadurch gekennzeichnet, dass** die Wellenlänge des Lichtstrahles (23) einen Wert hat, befindlich außerhalb des Bereiches von Wellenlängen, für die die ophtalmische Linse (1) durchlässig ist.

20. Verfahren nach einem der Ansprüche 1 bis 19, **dadurch gekennzeichnet, dass** die Wellenlänge des Lichtstrahles (23) einen Wert hat von kleiner als 325nm.

21. Verfahren nach Anspruch 19 oder 20, **dadurch gekennzeichnet, dass** der Lichtstrahl (23) von einer UV-Diode herrührt.

22. Vorrichtung zum Entgraten oder Anphasen eines Randes (5, 6) einer optischen Fläche (2, 3) einer ophtalmischen Linse (1), wobei die Vorrichtung (8) eine Drehstütze (7, 7') umfasst, zum Zwecke der Montage der Linse (1), ein Entgratungswerkzeug (9), Mittel (M1) zum Versetzen relativ zueinander der Stütze (7, 7') und des Werkzeuges (9) entlang einer Richtung parallel zur Rotationsachse (A1) der Stütze (7, 7'), eine Steuereinheit (19), angepasst zum Steuern der Versetzungsmittel (M1), **dadurch gekennzeichnet, dass** die Vorrichtung zumindest eine optische Messeinrichtung (20, 21) umfasst, aufweisend eine Lichtquelle (22), die einen planaren Lichtstrahl (23) erzeugt, gerichtet hin zu der optischen Fläche (2, 3), um dort einen linearen Lichtfleck (24) zu erzeugen, der den Rand (5, 6), der zu entgraten ist, kreuzt, optische Empfangsmittel (26), gerichtet hin zu dem Leuchtfleck (24) und mit der Steuereinheit (19) verbunden, wobei diese Mittel umfasst zur Berechnung der Krümmung (α) der Fläche (2, 3) benachbart dem Rand (5, 6), der zu entgraten ist, in Abhängigkeit der durchgeführten Erfassung bezüglich der optischen Empfangsmittel (26)

23. Vorrichtung nach Anspruch 22, **dadurch gekennzeichnet, dass** sie zwei optische Messeinrichtungen (20, 21) umfasst, aufweisend zwei Lichtquellen (22), gegenüberstehend angeordnet beiderseits der Linse (1), wobei die Quellen (22) zwei planare Lichtstrahle (23) erzeugen, jeweils gerichtet hin zu einer vorderen Fläche (2) und hin zu einer hinteren Fläche (3) der Linse (1), um einen linearen Leuchtfleck (24) zu erzeugen, optische Empfangsmittel (26), gerichtet hin zu jedem der Leuchtflecke (24), wobei die Berechnungsmittel ausgelegt sind zur Berechnung der Krümmung (α) von jeder Fläche (2, 3), benachbart von jedem zu entgratenden Rand (5, 6).

24. Vorrichtung nach Anspruch 22 oder 23, **dadurch gekennzeichnet, dass** die Steuereinheit ausgelegt ist zum alternierenden Aktivieren der Lichtquellen.

25. Vorrichtung nach einem der Ansprüche 22 bis 24, **dadurch gekennzeichnet, dass** die oder jede Lichtquelle (22) von der Rotationsachse (A1) der Stütze (7, 7') beabstandet ist.

26. Vorrichtung nach einem der Ansprüche 22 bis 25, **dadurch gekennzeichnet, dass** die oder jede Lichtquelle (22) derart ausgelegt, dass die Halbierungslinie (25) des Lichtstrahles (23) im Wesentlichen parallel zur Rotationsachse (A1) der Stütze (7, 7') vorliegt.

27. Vorrichtung nach einem der Ansprüche 22 bis 26, **dadurch gekennzeichnet, dass** die oder jede Lichtquelle (22) derart ausgelegt ist, dass der Lichtstrahl (23), der von ihm erzeugt ist, und die Rotationsachse (A1) der Stütze (7, 7') im Wesentlichen koplanar vorliegen.

28. Vorrichtung nach einem der Ansprüche 22 bis 27, **dadurch gekennzeichnet, dass** die optischen Empfangsmittel (26) ausgelegt sind, so dass deren Richtachse (A5) mit der Halbierungslinie (25) des Lichtstrahles (23) einen konstanten Richtwinkel (γ) ungleich null bildet.

29. Vorrichtung nach Anspruch 28, **dadurch gekennzeichnet, dass** die optischen Empfangsmittel (26) aus der Wert des Richtwinkels (γ) enthalten sei zwischen 40° und 50°.

30. Vorrichtung nach Anspruch 29, **dadurch gekennzeichnet dass** die optischen Empfangsmittel (26) derart ausgelegt sind, dass der Wert der Richtwinkels (γ) im Wesentlichen gleich ist zu 45°.

31. Vorrichtung nach einem der Ansprüche 28 bis 30, **dadurch gekennzeichnet, dass** die optischen Empfangsmittel (26) derart ausgelegt sind, dass deren Richtachse (A5) in einer Ebene (P') vorliegt, umfassend die Halbierungslinie des Lichtstrahles (23) und senkrecht vorliegend zur Ebene (P) des Lichtstrahles (23).

32. Vorrichtung nach einem der Ansprüche 22 bis 31, **dadurch gekennzeichnet, dass** die optischen Empfangsmittel (26) ein Objektiv (27) umfassen, dessen optische Achse zusammenfällt mit der Richtachse (A5) sowie einen Schirm (28), der die optische Richtachse (A5) schneidet, und an dem das Abbild (29) des Leuchtfleckes (24) ausgebildet ist.

33. Vorrichtung nach einem der Ansprüche 22 bis 32, **dadurch gekennzeichnet, dass** die Lichtquelle (22) ausgelegt ist, um einen kohärenten Lichtstrahl (23) zu generieren.

**34.** Vorrichtung nach Anspruch 33, **dadurch gekennzeichnet, dass** die Lichtquelle (22) ein Laser ist.

**35.** Vorrichtung nach einem der Ansprüche 22 bis 34, **dadurch gekennzeichnet, dass** die Wellenlänge des Lichtstrahles (23) einen Wert hat, befindlich außerhalb des Bereiches von Wellenlängen, für die die ophtalmische Linse (1) durchlässig oder transmissibel ist.

**36.** Vorrichtung nach einem der Ansprüche 22 bis 35, **dadurch gekennzeichnet, dass** die Wellenlänge des Lichtstrahles (23) einen Wert von kleiner als 325nm hat.

**37.** Vorrichtung nach Anspruch 35 oder 36, **dadurch gekennzeichnet, dass** die Lichtquelle (22) eine UV-Diode ist.

FIG.1

FIG.2

FIG.3

FIG.5

18

FIG.4

FIG.6

FIG.7

*FIG.8*

*FIG.9*

EP 1 352 709 B1

*FIG.10*

*FIG.11*

22